# EUROPEAN PATENT APPLICATION

(11) **EP 1 350 885 A1**
(43) Date of publication of application: **08.10.2003**
(21) Application number: 01271472.1
(22) Date of filing: 18.12.2001
(51) Int. Cl.: D06M 15/333, B32B 5/00

(54) **METHOD OF RESIN FINISH OF CLOTH**

(30) Priority: 18.12.2000 JP 2000384531
(71) Applicant: Denenchofu Roman CO., Ltd., Tokyo 145-0071 (JP)
(72) Inventor: WATANABE, Kazue, Ota-ku, Tokyo 145-0071 (JP)
(74) Representative: Makovski, Priscilla Mary
(86) International application number: JP0111097
(87) International publication number: WO02050368

(57) **Abstract**

A method of resin finish of a cloth, which comprises applying a generally rewettable and tacky aqueous mixed resin emulsion (2) prepared by admixing homogeneously about 98 wt % of an aqueous resin emulsion containing about 60 wt % of water and about 40 wt % of a rewettable and tacky polymer and 2 wt % of another aqueous resin emulsion containing about 56 wt % of water, about 40 wt % of a non-rewettable and weakly tacky copolymer and 4 wt % of a volatile organic solvent into a film form on a resin sheet (1) having a smooth surface and exhibiting no hygroscopicity and insolubility in an organic solvent, pressing and adhering a cloth (3) having moisture permeability on the aqueous mixed resin emulsion (2), removing the water and volatile organic solvent by evaporation while maintaining the resultant adhered state, and then removing the resin sheet (1) from one side of the cloth (3) by peeling.

## Description

### TECHNICAL FIELD

The present invention relates to a method of resin finish of a cloth and, more particularly, to a method of resin finish of a cloth which makes it possible to easily form a tacky or non-tacky resin-coating film which is not easily separated, on one side of the cloth without damaging the cloth while maintaining surface state of the other side of the cloth as equivalent as that of the cloth before resin finish.

### BACKGROUND ART

If printing etc. can be easily performed on cloth, such as clothing, curtain, or a bedding cover which became unnecessary, like a paper, the use of reuse of cloth will spread. However, generally, since cloth is limp and does not have tension, it is difficult to treat like paper.

On the other hand, a method of carrying out thermal bonding of a film or sheet made of resin to cloth has been known conventionally. However, there were fault in that it damages cloth with heat or allows separation thereof easily since the adhesion to cloth is inadequate.

### DISCLOSURE OF THE INVENTION

Accordingly, an object of the present invention is to provide a method of resin finish of a cloth which makes it possible to easily form a tacky or non-tacky resin-coating film which is not easily separated, on one side of the cloth without damaging the cloth while maintaining surface state of the other side of the cloth as equivalent as that of the cloth before resin finish.

In order to achieve the above-mentioned object, the present invention provides as a first aspect a method of resin finish of a cloth, which comprises applying a generally rewettable aqueous mixed resin emulsion having weak tackiness prepared by admixing homogeneously about 98 wt % of an aqueous resin emulsion containing about 60 wt % of water and about 40 wt % of a rewettable polymer having tackiness and 2 wt % of another aqueous resin emulsion containing about 56 wt % of water, about 40 wt % of a non-rewettable copolymer having weak tackiness and about 4 wt % of a volatile organic solvent into a film form on a resin sheet having a smooth surface and exhibiting moisture impermeability and insolubility in an organic solvent, pressing and adhering a cloth having moisture permeability on the aqueous mixed resin emulsion, removing the water and volatile organic solvent by evaporation while maintaining the resultant adhered state, and then removing the resin sheet from one side of the cloth by peeling.

According to the above-mentioned resin finish method, it is possible to provide a resin-finished cloth having a proper tensity and bending properties, since the cloth can be hardened at one side by a dried solid ingredient of the generally non-rewettable and tacky aqueous mixed resin emulsion while maintaining surface state of the other side of the cloth as equivalent as that of the cloth before resin finish. Moreover, since the polymer which occupies for a solid is non-tacky in a dried state and the non-rewettable and weakly tacky copolymer contained in very small quantity is also weakly tacky in a dried state, it is possible to get a resin-finished cloth which is non-tacky in the dried state. Therefore, the surface from which the resin sheet has been removed can become a smooth surface. Further, in the case that the aforementioned solid ingredient consists of a re-wettable and tacky polymer only, it will become hard and brittle when it dries. On the other hand, a very small quantity of non-rewettable and weakly tacky copolymer which is contained in the aforementioned solid ingredient has resiliency when it dries. Therefore, by homogeneously mixing it with the re-wettable and tacky polymer, it is possible to make a resin-finished cloth which is not easily cracked or broken when it is bent. Accordingly, a resin-finished cloth which is made by the present invention can be used suitably as a substitute of memo papers, craft papers or the like.

Moreover, after the water in the aforementioned aqueous mixed resin emulsion has been removed by evaporation, the resin sheet can be easily removed from the resin-finished cloth, but it maintains adhering to the resin-finished cloth , unless removing power is applied positively thereto. Therefore, it is possible to perform printing by an ink-jet printer or the like on the cloth surface of the resin-finished cloth, while keeping the resin sheet which adheres to the resin-finished sheet. At this time, since the resin sheet can suitably serve as a pasteboard, printing can be performed smoothly without causing paper jam or the like.

In addition, in a case that the cloth surface side of the resin-finished cloth made by the aforementioned method is printed with patterns by dye inks and an ink-jet printer, it is desirable to infiltrate beforehand a pretreatment liquid for preventing a blot or color-mixing of dye ink to the cloth surface side of a resin-finished cloth, and to dry it.

Furthermore, the present invention provides as a second aspect a method of resin finish of a cloth, which comprises applying a generally non-rewettable and tacky aqueous mixed resin emulsion prepared by admixing homogeneously about 80 wt % of an aqueous resin emulsion containing about 60 wt % of water and about 40 wt % of a non-rewettable and strongly tacky polymer, about 10 wt % of another aqueous resin emulsion containing about 60 wt % of water and about 40 wt % of a rewettable and tacky polymer and about 10 wt % of another aqueous resin emulsion containing about 56 wt % of water, about 40 wt % of a non-rewettable and weakly tacky copolymer and about 4 wt % of a volatile organic solvent on a resin sheet having a smooth surface and exhibiting no hygroscopicity and insolubility in an organic solvent, pressing and adhering thereon a resin-finished cloth formed by the method as set forth in claim 1 at a side where the resin sheet has been peeled off, removing the water and volatile organic solvent by evaporation while maintaining the resultant adhered state, and then removing the resin sheet from one side of the resin-finished cloth by peeling.

Furthermore, the present invention provides as a third aspect a method of resin finish of a cloth, which comprises applying a generally non-rewettable and tacky aqueous mixed resin emulsion prepared by admixing homogeneously about 80 wt % of an aqueous resin emulsion containing about 60 wt % of water and about 40 wt % of a non-rewettable and strongly tacky polymer, about 10 wt % of another aqueous resin emulsion containing about 60 wt % of water and about 40 wt % of a rewettable and tacky polymer and about 10 wt % of another aqueous resin emulsion containing about 56 wt % of water, about 40 wt % of a non-rewettable and weakly tacky copolymer and about 4 wt % of a volatile organic solvent on a resin sheet having a smooth surface and exhibiting no hygroscopicity and insolubility in an organic solvent, pressing and adhering a cloth on the aqueous mixed resin emulsion, removing the water and volatile organic solvent by evaporation while maintaining the resultant adhered state, and then removing said resin sheet from one side of said cloth by peeling.

Furthermore, the present invention provides as a fourth aspect a method of resin finish of a cloth, which comprises applying a non-rewettable and strongly tacky aqueous mixed resin emulsion prepared by admixing homogeneously about 90 wt % of a non-rewettable and strongly tacky aqueous resin emulsion containing about 60 wt % of water and about 40 wt % of a non-rewettable and strongly tacky polymer or an aqueous resin emulsion containing about 60 wt % of water and about 40 wt % of a non-rewettable and strongly tacky copolymer, about 10 wt % of another aqueous resin emulsion containing about 56 wt % of water and about 40 wt % of a non-rewettable and weakly tacky copolymer and about 4 wt % of a volatile organic solvent on a resin sheet having a smooth surface and exhibiting no hygroscopicity and insolubility in an organic solvent, and bonding thereon a resin-finished cloth formed by the method as set forth in claim 3 by pressing and adhering the resin-finished cloth thereon and then removing the water and volatile organic solvent by evaporation while maintaining the resultant adhered state.

Preferably, the rewettable and tacky polymer is an acetic acid vinyl polymer.

More preferably, the non-rewettable and weakly tacky copolymer contains an ethylene-acetic acid vinyl copolymer and an acetic acid vinyl-acrylics copolymer.

More preferably, the non-rewettable and strongly tacky polymer is an acetic acid vinyl-acrylics polymer.

More preferably, the resin sheet is a cellophane film sheet.

### BRIEF DESCRIPTION OF THE DRAWINGS

Figs. 1A and 1B are a perspective view and an end view, respectively, showing a first process of the resin-finishing method of a first embodiment of the present invention.
Figs. 2A and 2B are a perspective view and an end view, respectively, showing the next process of the resin-finishing method of the first embodiment.
Fig. 3 is a sectional enlarged view of a resin-finished cloth which can be obtained by a final process of the first embodiment.
Figs. 4A and 4B are a perspective view and an end view, respectively, showing a first process of the resin-finishing method of a second embodiment of the present invention.
Figs. 5A and 5B are a perspective view and an end view, respectively, showing the next process of the resin-finishing method of the second embodiment.
Fig. 6 is a sectional enlarged view of a resin-finished cloth which can be obtained by a final process of the second embodiment.
Figs. 7A and 7B are a perspective view and an end view, respectively, showing a first process of the resin-finishing method of a third embodiment of the present invention.
Figs. 8A and 8B are a perspective view and an end view, respectively, showing the next process of the resin-finishing method of the third embodiment.
Fig. 9 is a sectional enlarged view of a resin-finished cloth which can be obtained by a final process of the third embodiment.
Figs. 10A and 10B are a perspective view and an end view, respectively, showing a first process of the resin-finishing method of a fourth embodiment of the present invention.
Figs. 11A and 11B are a perspective view and an end view, respectively, showing the next process of the resin-finishing method of the fourth embodiment.
Fig. 12 is a sectional enlarged view of a resin-finished cloth which can be obtained by a final process of the fourth embodiment.
Fig. 13 is a sectional enlarged view of a resin-finished cloth which can be obtained by an example of modification of the fourth embodiment.

### BEST MODE FOR CARRYING OUT THE INVENTION

Figs. 1A, 1B, 2A, 2B, and 3 show a first embodiment of the present invention. At the first, as shown in Figs. 1A and 1B, a cellophane sheet 1, for example, is prepared as a resin sheet which has a smooth surface and exhibits moisture impermeability and insolubility in an organic solvent, and a generally rewettable aqueous mixed resin emulsion 2 having weak tackiness is applied thereon. The generally rewettable and tacky aqueous mixed resin emulsion 2 is prepared by admixing homogeneously about 98 wt % of an aqueous resin emulsion containing about 60 wt % of water and about 40 wt % of a rewettable polymer having tackiness and 2 wt % of another aqueous resin emulsion containing about 56 wt % of water, about 40 wt % of a non-rewettable copolymer having weak tackiness and about 4 wt % of a volatile organic solvent. Preferably, an acetic acid vinyl polymer which is relatively cheep may be used as the rewettable and tacky polymer. However, other polymers or copolymers having a property which is substantially equivalent to that of the acetic acid vinyl polymer can also be used. Further, an ethylene-acetic acid vinyl copolymer and an acetic acid vinyl-acrylics copolymer may be used as the non-rewettable and weakly tacky copolymer. However, other copolymers having a property which is substantially equivalent to that of the ethylene-acetic acid-vinyl copolymer and the acetic acid vinyl-acrylics copolymer can also be used. Furthermore, a toluene or other organic solvents may be used as the volatile organic solvent. The generally rewettable aqueous mixed resin emulsion 2 is a cloudy milky liquid in which minute particles of the respective polymer and copolymer are homogeneously distributed.

Next, a cloth 3 having moisture permeability is pressed on and adhered to the aqueous mixed resin emulsion 2 by, for example, a roller , blade or the like (not shown) , and then the water and the volatile organic solvent contained in the emulsion 2 is then removed by evaporation. That is, the solid ingredient of the aqueous mixed resin emulsion 2 is made dry.

Thereafter, as shown in Fig. 3, a resin-finished cloth 5 is obtained by removing the cellophane sheet 1 from the one side of the cloth 3.

According to the above-mentioned resin-finishing method of the first embodiment, it is possible to provide a resin-finished cloth 5 having a proper tensity and bending properties, since the cloth 3 can be hardened at one side by a dried solid ingredient of the generally non-rewettable and tacky aqueous mixed resin emulsion 2 while maintaining surface state of the other side of the cloth 3 as equivalent as that of the cloth before resin finish. Moreover, since the polymer which occupies for a solid is non-tacky in a dried state and the non-rewettable and weakly tacky copolymer contained in very small quantity is also weakly tacky in a dried state, it is possible to get a resin-finished cloth 5 which is non-tacky in the dried state. Therefore, the surface from which the resin sheet 1 has been removed can become a smooth surface. Further, in the case that the aforementioned solid ingredient consists of a re-wettable and tacky polymer only, it will become hard and brittle when it dries. On the other hand, a very small quantity of non-rewettable and weakly tacky copolymer which is contained in the aforementioned solid ingredient has resiliency when it dries. Therefore, by homogeneously mixing it with the re-wettable and tacky polymer, it is possible to make a resin-finished cloth which is not easily cracked or broken when it is bent.

Accordingly, a resin-finished cloth 5 which is made by the first embodiment can be used suitably as a substitute of memo papers, craft papers or the like.

Moreover, after the water in the aforementioned aqueous mixed resin emulsion 2 has been removed by evaporation, the resin sheet 1 can be easily removed from the resin-finished cloth 5, but it maintains adhering to the resin-finished cloth 5, unless removing power is applied positively thereto. Therefore, it is possible to perform printing by an ink-jet printer or the like on the cloth surface of the resin-finished cloth 5, while keeping the resin sheet 1 which adheres to the resin-finished sheet 5. Therefore, a memo paper, a calendar, a poster or the like can be made by printing a preferable digital image on the cloth surface side of the resin-finished cloth 5. At this time, since the resin-finished cloth 5 has a smooth surface which is formed by a dried solid ingredient of the rewettable and tacky polymer after the resin sheet 1 is removed, it is possible to recur adhesiveness on the smooth surface by wetting it by adding thereon a proper quantity of moisture.

In addition, in a case that the cloth surface side of the resin-finished cloth 5 made by the aforementioned method is printed with patterns by dye inks and an ink-jet printer, it is desirable to infiltrate beforehand a pretreatment liquid for preventing a blot or color-mixing of dye ink to the cloth surface side of a resin-finished cloth 5, and to dry it.

Figs. 4A, 4B, 5A, 5B, and 6 show a second embodiment of the present invention. In the second embodiment, as shown in Figs. 4A and 4B, a cellophane sheet 1, for example, is prepared as a resin sheet which has a smooth surface and exhibits moisture impermeability and insolubility in an organic solvent, and a generally non-rewettable aqueous mixed resin emulsion 6 having tackiness is applied on the resin sheet. The generally non-rewettable and tacky aqueous mixed resin emulsion 6 is prepared by admixing homogeneously about 80 wt % of an aqueous resin emulsion containing about 60 wt % of water and about 40 wt % of a non-rewettable and strongly tacky polymer, about 10 wt % of another aqueous resin emulsion containing about 60 wt % of water and about 40 wt % of a rewettable and tacky polymer and about 10 wt % of another aqueous resin emulsion containing about 56 wt % of water, about 40 wt % of a non-rewettable and weakly tacky copolymer and about 4 wt % of a volatile organic solvent. Preferably, an acetic acid vinyl-acrylics polymer may be used as the non-rewettable and strongly tacky polymer. However, other polymers or copolymers having a property which is substantially equivalent to that of the acetic acid vinyl polymer can also be used. Further, an acetic acid vinyl polymer may be used as the rewettable and tacky polymer. However, other polymers or copolymers having a property which is substantially equivalent to that of the acetic acid vinyl polymer can also be used. Further, an ethylene-acetic acid vinyl copolymer and an acetic acid vinyl-acrylics copolymer may be used as the non-rewettable and weakly tacky copolymer. However, other copolymers having a property which is substantially equivalent to that of the ethylene-acetic acid vinyl copolymer and the acetic acid vinyl-acrylics copolymer can also be used. Furthermore, a toluene or other organic solvents may be used as the volatile organic solvent.

Next, as shown Figs. 5A and 5B, the resin-finished cloth 5 which is made by the method of the first embodiment is pressed on and adhered to the aqueous mixed resin emulsion 6, and then the water and the volatile organic solvent contained in the emulsion 6 is then removed by evaporation. Thereafter, as shown in Fig. 6, a resin-finished cloth 7 having tackyness in one side thereof can be obtained by removing the resin sheet 1 from the one side of the resin-finishing cloth 5.

According to the resin-finishing method of the second embodiment, it is possible to obtain a resin-finished cloth 7 which has at one side thereof a generally non-rewettable and tacky surface in a dried state, while maintaining surface state of the other side of the cloth as equivalent as that of the cloth before resin finish. The generally non-rewettable and tacky surface at one side of the resin-finished cloth 7 can be repeatedly reused by adhering and removing. Moreover, after the water in the aforementioned aqueous mixed resin emulsion 6 has been removed by evaporation, the resin sheet 1 can be easily removed from the resin-finished cloth 5, but it maintains adhering to the resin-finished cloth 5, unless removing power is applied positively thereto. Therefore, it is possible to perform printing by an ink-jet printer or the like on the cloth surface of the resin-finished cloth 5, while keeping the resin sheet 1 which adheres to the resin-finished sheet 5. In the method of the second embodiment, the aqueous mixed resin emulsion 6 may by applied on the whole surface of the resin-finished cloth 5. However, the aqueous mixed resin emulsion 6 may by applied on the surface of the resin-finished cloth 5 in a partial region, or may be applied thereon and distributed in either a dot-matrix pattern, net-pattern, or the like.

Figs. 7A, 7B, 8A, 8B, and 9 show a third embodiment of the present invention. In the third embodiment, as shown in Figs. 7A and 7B, a cellophane sheet 1, for example, is prepared as a resin sheet which has a smooth surface and exhibits moisture impermeability and insolubility in an organic solvent, and a generally non-rewettable aqueous mixed resin emulsion 8 having tackiness is applied on the resin sheet 1. The generally non-rewettable and tacky aqueous mixed resin emulsion 8 is prepared by admixing homogeneously about 80 wt % of an aqueous resin emulsion containing about 60 wt % of water and about 40 wt % of a non-rewettable and strongly tacky polymer, about 10 wt % of another aqueous resin emulsion containing about 60 wt % of water and about 40 wt % of a rewettable and tacky polymer and about 10 wt % of another aqueous resin emulsion containing about 56 wt % of water, about 40 wt % of a non-rewettable and weakly tacky copolymer and about 4 wt % of a volatile organic solvent. Preferably, an acetic acid vinyl-acrylics polymer may be used as the non-rewettable and strongly tacky polymer. However, other polymers or copolymers having a property which is substantially equivalent to that of the acetic acid vinyl polymer can also be used. Further, an acetic acid vinyl polymer may be used as the rewettable and tacky polymer. However, other polymers or copolymers having a property which is substantially equivalent to that of the acetic acid vinyl polymer can also be used. Further, an ethylene-acetic acid vinyl copolymer and an acetic acid vinyl-acrylics copolymer may be used as the non-rewettable and weakly tacky copolymer. However, other copolymers having a property which is substantially equivalent to that of the ethylene-acetic acid vinyl copolymer and the acetic acid vinyl-acrylics copolymer can also be used. Furthermore, a toluene or other organic solvents may be used as the volatile organic solvent.

Next, as shown Figs. 8A and 8B, a cloth 3 is pressed on and adhered to the aqueous mixed resin emulsion 8 by using a roller 4 or the like, and then the water and the volatile organic solvent contained in the emulsion 8 is removed by evaporation. Thereafter, as shown in Fig. 9, a resin-finished cloth 9 can be obtained by removing the resin sheet 1 from the one side of the cloth 3.

According to the resin-finishing method of the third embodiment, it is possible to obtain a resin-finished cloth which has at one side thereof a generally non-rewettable and tacky surface in a dried state, while maintaining surface state of the other side of the cloth as equivalent as that of the cloth before resin finish. The generally non-rewettable and tacky surface at one side of the resin-finished cloth can be repeatedly reused by adhering and removing.

Further, it is possible to easily obtain a resin-finished sheet having cloth surface at both side thereof by strongly adhering the two resin-finished cloths 9 to each other at the adhesive side thereof.

Moreover, after the water in the aforementioned aqueous mixed resin emulsion 8 has been removed by evaporation, the resin sheet 1 can be easily removed from the resin-finished cloth 9, but it maintains adhering to the resin-finished cloth 9, unless removing power is applied positively thereto. Therefore, it is possible to perform printing by an ink-jet printer or the like on the cloth surface of the resin-finished cloth 9, while keeping the resin sheet 1 which adheres to the resin-finished sheet 9.

Figs. 10A, 10B, 11A, 11B, and 12 show a fourth embodiment of the present invention. In the third embodiment, as shown in Figs. 10A and 10B, a cellophane sheet 1, for example, is prepared as a resin sheet which has a smooth surface and exhibits moisture impermeability and insolubility in an organic solvent, and a generally non-rewettable aqueous mixed resin emulsion 10 having a strong tackiness is applied on the resin sheet 1. The generally non-rewettable and strongly tacky aqueous mixed resin emulsion 10 is prepared by admixing homogeneously about 90 wt % of a non-rewettable and strongly tacky aqueous resin emulsion containing about 60 wt % of water and about 40 wt % of a non-rewettable and strongly tacky polymer or an aqueous resin emulsion containing about 60 wt % of water and about 40 wt % of a non-rewettable and strongly tacky copolymer, about 10 wt % of another aqueous resin emulsion containing about 56 wt % of water and about 40 wt % of a non-rewettable and weakly tacky copolymer and about 4 wt % of a volatile organic solvent.

Preferably, an acetic acid vinyl-acrylics polymer may be used as the non-rewettable and strongly tacky polymer. However, other polymers or copolymers having a property which is substantially equivalent to that of the acetic acid vinyl polymer can also be used. Further, an ethylene-acetic acid vinyl copolymer and an acetic acid vinyl-acrylics copolymer may be used as the non-rewettable and weakly tacky copolymer. However, other copolymers having a property which is substantially equivalent to that of the ethylene-acetic acid vinyl copolymer and the acetic acid vinyl-acrylics copolymer can also be used. Furthermore, a toluene or other organic solvents may be used as the volatile organic solvent.

Next, as shown Figs. 11A and 12B, a resin-finished cloth 9 which has been made by the method of the third embodiment is pressed on and adhered to the aqueous mixed resin emulsion 10 by using a roller 4 or the like, and then the water and the volatile organic solvent contained in the emulsion 10 is removed by evaporation. Thereafter, as shown in Fig. 12, the resin-finished cloth 11 which is adhered to the resin sheet 1 can be obtained.

According to the resin-finishing method of the fourth embodiment, it is possible to obtain a resin-finished cloth 11 which is adhered at one side thereof with a resin sheet 1, while maintaining surface state of the other side of the cloth as equivalent as that of the cloth before resin finish. Moreover, as shown in Fig. 13, it is possible to adhere two resin-finished cloths 10 and 10 to the both sides of the resin sheet 1. Therefore, it is possible to easily provide a resin-finished cloth 11 having a sandwich-structure reinforced therein with the resin sheet 1, while maintaining surface state of the other side of the cloth as equivalent as that of the cloth before resin finish.

Although the present invention has been explained based on the embodiments shown in the drawings. However, the present invention is not limited only to the modes of the above-mentioned and various modifications can be added to respective constituent matters within the scope of the present invention. For example, textiles, a non-woven fabric, a mesh, etc. can be used as a cloth.

### INDUSTRIAL ADVANTAGES TO BE OBTAINED

As is clearly described hereinbefore, the present invention can easily form a tacky or non-tacky resin-coating film which is not easily separated, on one side of the cloth without damaging the cloth while maintaining surface state of the other side of the cloth as equivalent as that of the cloth before resin finish.

## Claims

1. A method of resin finish of a cloth, comprising:
applying a generally rewettable aqueous mixed resin emulsion having weak tackiness prepared by admixing homogeneously about 98 wt % of an aqueous resin emulsion containing about 60 wt % of water and about 40 wt % of a rewettable polymer having tackiness and 2 wt % of another aqueous resin emulsion containing about 56 wt % of water, about 40 wt % of a non-rewettable copolymer having weak tackiness and about 4 wt % of a volatile organic solvent into a film form on a resin sheet having a smooth surface and exhibiting moisture impermeability and insolubility in an organic solvent;
pressing and adhering a cloth having moisture permeability on the aqueous mixed resin emulsion;
removing the water and volatile organic solvent by evaporation while maintaining the resultant adhered state; and then
removing said resin sheet from one side of the cloth by peeling.

2. A method of resin finish of a cloth, comprising:
applying a generally non-rewettable and tacky aqueous mixed resin emulsion prepared by admixing homogeneously about 80 wt % of an aqueous resin emulsion containing about 60 wt % of water and about 40 wt % of a non-rewettable and strongly tacky polymer, about 10 wt % of another aqueous resin emulsion containing about 60 wt % of water and about 40 wt % of a rewettable and tacky polymer and about 10 wt % of another aqueous resin emulsion containing about 56 wt % of water, about 40 wt % of a non-rewettable and weakly tacky copolymer and about 4 wt % of a volatile organic solvent on a resin sheet having a smooth surface and exhibiting no hygroscopicity and insolubility in an organic solvent;
pressing and adhering thereon a resin-finished cloth formed by the method as set forth in claim 1 at a side where the resin sheet has been peeled off;
removing the water and volatile organic solvent by evaporation while maintaining the resultant adhered state; and then
removing said resin sheet from one side of said resin-finished cloth by peeling.

3. A method of resin finish of a cloth, comprising:
applying a generally non-rewettable and tacky aqueous mixed resin emulsion prepared by admixing homogeneously about 80 wt % of an aqueous resin emulsion containing about 60 wt % of water and about 40 wt % of a non-rewettable and strongly tacky polymer, about 10 wt % of another aqueous resin emulsion containing about 60 wt % of water and about 40 wt % of a rewettable and tacky polymer and about 10 wt % of another aqueous resin emulsion containing about 56 wt % of water, about 40 wt % of a non-rewettable and weakly tacky copolymer and about 4 wt % of a volatile organic solvent on a resin sheet having a smooth surface and exhibiting no hygroscopicity and insolubility in an organic solvent;
pressing and adhering a cloth on the aqueous mixed resin emulsion;
removing the water and volatile organic solvent by evaporation while maintaining the resultant adhered state; and then
removing said resin sheet from one side of said cloth by peeling.

4. A method of resin finish of a cloth, comprising:
applying a non-rewettable and strongly tacky aqueous mixed resin emulsion prepared by admixing homogeneously about 90 wt % of a non-rewettable and strongly tacky aqueous resin emulsion containing about 60 wt % of water and about 40 wt % of a non-rewettable and strongly tacky polymer or an aqueous resin emulsion containing about 60 wt % of water and about 40 wt % of a non-rewettable and strongly tacky copolymer, about 10 wt % of another aqueous resin emulsion containing about 56 wt % of water and about 40 wt % of a non-rewettable and weakly tacky copolymer and about 4 wt % of a volatile organic solvent on a resin sheet having a smooth surface and exhibiting no hygroscopicity and insolubility in an organic solvent; and
bonding thereon a resin-finished cloth formed by the method as set forth in claim 3 by pressing and adhering the resin-finished cloth thereon and then removing the water and volatile organic solvent by evaporation while maintaining the resultant adhered state.

5. The method of resin finish of a cloth according to any one of claims 1 through 3, wherein said rewettable and tacky polymer is an acetic acid vinyl polymer.

6. The method of resin finish of a cloth according to any one of claims 1 through 4, wherein said non-rewettable and weakly tacky copolymer contains an ethylene-acetic acid vinyl copolymer and an acetic acid vinyl-acrylics copolymer.

7. The method of resin finish of a cloth according to any one of claims 1 through 4, wherein said non-rewettable and strongly tacky polymer is an acetic acid vinyl-acrylics polymer.

8. The method of resin finish of a cloth according to any one of claims 1 through 4, wherein said resin sheet is a cellophane film sheet.
